# EUROPEAN PATENT APPLICATION

(11) **EP 3 255 905 A1**
(43) Date of publication of application: **13.12.2017**
(21) Application number: 16173269.8
(22) Date of filing: 07.06.2016
(51) Int. Cl.: H04S 7/00

(54) **DISTRIBUTED AUDIO MIXING**

(71) Applicant: Nokia Technologies Oy, 02610 Espoo (FI)
(72) Inventor: ERONEN, Antti, 33820 Tampere (FI); LEHTINIEMI, Arto, 33880 Lempäälä (FI); LEPPÄNEN, Jussi, 33580 Tampere (FI); ARRASVUORI, Juha, 33100 Tampere (FI)
(74) Representative: Nokia EPO representatives

(57) **Abstract**

An apparatus is configured to receive a plurality of audio signals representing captured audio from respective audio sources in a space, and process the received audio signals to generate a spatial audio signal for playback, in which the processing comprises: identifying one of the audio sources as a primary audio source, and subsequent to identifying the primary audio source, generating the spatial audio signal so that the spatial position of the one or more other audio sources is changed.

## Description

### Field

This specification relates generally to methods and apparatus for distributed audio mixing. The specification further relates to, but it not limited to, methods and apparatus for distributed audio capture, mixing and rendering of spatial audio signals to enable spatial reproduction of audio signals.

### Background

Spatial audio refers to playable audio data that exploits sound localisation. In a real world space, for example in a concert hall, there will be multiple audio sources, for example the different members of an orchestra or band, located at different locations on the stage. The location and movement of the sound sources is a parameter of the captured audio. In rendering the audio as spatial audio for playback such parameters are incorporated in the data using processing algorithms so that the listener is provided with an immersive and spatially oriented experience.

Nokia's Spatial Audio Capture (SPAC) is an example technology for processing audio captured via a microphone array into spatial audio; that is audio with a spatial percept. The intention is to capture audio so that when it is rendered to a user the user will experience the sound field as if they are present at the location of the capture device.

An example application of spatial audio is in virtual reality (VR) whereby both video and audio data is captured within a real world space. In the rendered version of the space, i.e. the virtual space, the user, through a VR headset, may view and listen to the captured video and audio which has a spatial percept.

Rendering of captured audio may be complex and the quality of spatial audio produced in terms of listener experience may be degraded in current systems, for example in situations where one or more audio sources change position or move during capture.

### Summary

According to one aspect, a method comprises: receiving a plurality of audio signals representing captured audio from respective audio sources in a space; processing the received audio signals to generate a spatial audio signal, in which the processing comprises: identifying one of the audio sources as a primary audio source; and subsequent to identifying the primary audio source, generating the spatial audio signal so that the spatial position of the one or more other audio sources is changed.

The spatial position of the one or more other audio sources may be changed responsive to identifying the primary audio source.

The spatial position of the one or more other audio sources may be changed responsive to detecting a change in spatial position of the primary audio source.

The spatial position of the one or more other audio sources may be changed responsive to detecting a change in listener position within the space.

The step of identifying the primary audio source may be performed responsive to an event detected through analysis of the audio signals or a detected positional change, and may be repeated subsequently upon detection of a new event.

The step of identifying the primary audio source may be based on attributes of the audio signals received from the audio sources.

Identifying the primary audio source may comprise identifying the audio signal with the greatest amplitude or pitch variation.

Identifying the primary audio source may comprise identifying the signal with the most complex timbre or greatest variation in timbre.

Identifying the primary audio source may be based on selection data manually entered through a user interface.

The step of identifying the primary audio source may be based on receiving identification data from a tag associated with, or carried by, one of the audio sources.

The step of identifying the primary audio source may be based on the respective positions of the audio sources.

The step of identifying the primary audio source may comprise identifying the audio source exhibiting the greatest spatial movement.

The method may further comprise ranking the other audio sources based on attributes thereof and, in generating the spatial audio signal, applying different changes in spatial position based on rank.

The method may further comprise dividing the other audio sources into groups, and, in generating the spatial audio signal, applying different changes in spatial position to audio sources in different groups.

The step of generating the spatial audio signal may comprise changing the positions of the other audio sources to move away from the primary audio source subsequent to its identification.

The other audio sources may be ranked in order of importance and the amount of movement away from the primary audio source may be different for each rank.

The respective direction of movement of the other audio sources may be different and dependent on detected movement of the primary audio source.

The step of generating the spatial audio signal may comprise changing the positions of the other audio sources to track movement of the primary audio source.

The spatial separation between the other audio sources and the primary audio source may remain substantially the same.

The tracking movement may be only along one axis.

Prior to generating the spatial audio signal, the method may further comprise grouping at least two of the other audio sources in which the spatial position of at least one is changed so that they are spatially closer together, and wherein, in generating the spatial audio signal, the grouped audio sources may track movement of the primary audio source in substantially the same direction.

The grouped audio sources may track movement of the primary audio source to maintain substantially the same separation distance.

The change of spatial position of the at least one group source may be such that the group is positioned on the opposite side of a listener position relative to the primary audio source.

The method may further comprise receiving data indicating a selected one of a plurality of possible movement types, and wherein the step of generating the spatial audio signal comprises changing the spatial position of the other audio sources based on rules corresponding to the movement type.

One of the said movement types may be a repelling type in which the corresponding rules cause the spatial positions of the other audio sources to move away from the primary audio source subsequent to its identification.

One of the said movement types may be a mirroring type in which the corresponding rules cause the spatial positions of the other audio sources to follow or mirror the primary audio source subsequent to its identification.

The selection of a movement type may be received through a user interface.

According to another aspect, there is provided a computer program comprising instructions that when executed by a computer apparatus control it to perform the method of any of preceding definition.

According to another aspect, there is provided apparatus comprising at least one processor and at least one memory including computer program code, the at least one memory and the computer program code configured with the processor to cause the apparatus to: receive a plurality of audio signals representing captured audio from respective audio sources in a space; process the received audio signals to generate a spatial audio signal for playback, in which the processing comprises: identifying one of the audio sources as a primary audio source relative to one or more other audio sources; and subsequent to identifying the primary audio source, generating the spatial audio signal so that the spatial position of the one or more other audio sources is changed.

According to another aspect, there is provided a non-transitory computer-readable storage medium having stored thereon computer-readable code, which, when executed by at least one processor, causes the at least one processor to perform a method, comprising: receiving a plurality of audio signals representing captured audio from respective audio sources in a space; processing the received audio signals to generate a spatial audio signal for playback, in which the processing comprises: identifying one of the audio sources as a primary audio source relative to one or more other audio sources; and subsequent to identifying the primary audio source, generating the spatial audio signal so that the spatial position of the one or more other audio sources is changed.

According to another aspect, there is provided apparatus, the apparatus having at least one processor and at least one memory having computer-readable code stored thereon which when executed controls the at least one processor: to receive a plurality of audio signals representing captured audio from respective audio sources in a space; to process the received audio signals to generate a spatial audio signal for playback, in which the processing comprises: identifying one of the audio sources as a primary audio source relative to one or more other audio sources; and subsequent to identifying the primary audio source, generating the spatial audio signal so that the spatial position of the one or more other audio sources is changed.

### Brief Description of the Drawings

Embodiments will now be described, by way of non-limiting example, with reference to the accompanying drawings, in which:
Figure 1 is a schematic representation of a distributed audio capture scenario, including use of a rendering apparatus according to embodiments;
Figure 2 is a schematic diagram illustrating components of the Figure 1 rendering apparatus;
Figure 3 is a flow diagram showing method steps of audio capture and rendering according to an embodiment;
Figure 4 is a flow diagram showing method steps in one example of a movement control system;
Figures 5a - 5c are partial schematic views of a spatial audio field showing multiple objects in respective stages of a movement control method;
Figure 6 is a flow diagram showing more detailed method steps in a movement control system;
Figures 7a - 7c are partial schematic views of a spatial audio field showing multiple objects in respective stages of a second movement control method;
Figures 8a and 8b are partial schematic views of horizontal and vertical planes in a three dimensional space showing multiple objects in respective stages of a third movement control method;
Figures 9a to 9c are partial schematic views showing multiple objects in respective stages of a fourth movement control method;
Figures 10a and 10b are schematic views showing multiple objects in respective stages of a fifth movement control method; and
Figure 11 is a schematic diagram indicating functional components used in capture and rendering stages of an apparatus according to embodiments.

### Detailed Description of Embodiments

Embodiments herein relate to systems and methods relating to the capture and rendering of spatial audio data for playback. In particular, the embodiments relate to distributed spatial and rendering methods in which there are multiple audio sources which may move within a virtual space over time. Each audio source generates respective audio signals and, in some embodiments, positioning information for use by the system.

An example application is in a VR capture and rendering system in which video is also captured and rendered to provide an immersive user experience. Nokia's OZO (RTM) VR camera is used as an example of a VR capture device which comprises a microphone array to provide a spatial audio signal, but it will be appreciated that the embodiments are not limited to VR applications nor the use of microphone arrays at the capture point.

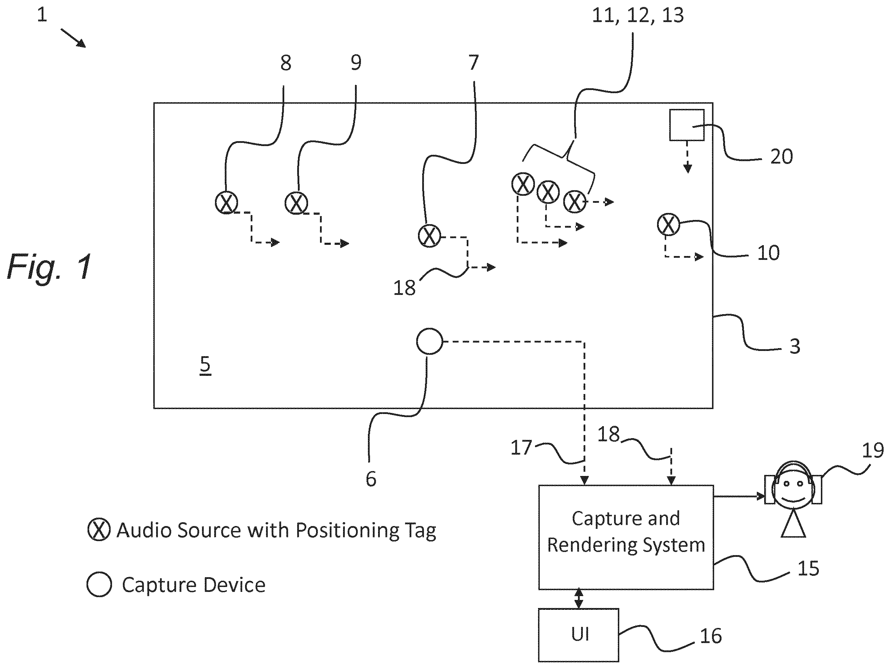

Referring to Figure 1, an overview of a VR capture scenario 1 is shown together with a first embodiment capture and rendering system (CRS) 15 with associated user interface 16. The Figure shows in plan-view a real world space 3 which may be for example a concert hall or other music venue. The CRS 15 is applicable to any real world space, however. A VR capture device 6 for video and spatial audio capture may be supported on a floor 5 of the space 3 in front of multiple audio sources, in this case a band; the position of the VR capture device 6 is known, e.g. through predetermined positional data or signals derived from a positioning tag on the VR capture device (not shown). The VR capture device 6 comprises a microphone array configured to provide spatial audio capture.

The band may be comprised of multiple members each of which has an associated external microphone or (in the case of guitarists) a pick-up feed providing audio signals. Each may therefore be termed an audio source for convenience. In other embodiments, other types of audio source may be used. The audio sources in this example comprise a lead vocalist 7, a drummer 8, lead guitarist 9, bass guitarist 10, and three members of a choir or backing singers 11, 12, 13 which members are spatially close together in a group.

As well as having an associated microphone or audio feed, the audio sources 7 - 13 carry a positioning tag which may be any module capable of indicating through data its respective spatial position to the CRS 15. For example the positioning tag may be a high accuracy indoor positioning (HAIP) tag which works in association with one or more HAIP locators 20 within the space 3. HAIP systems use Bluetooth Low Energy (BLE) communication between the tags and the one or more locators 20. For example, there may be four HAIP locators mounted on, or placed relative to, the VR capture device 6. A respective HAIP locator may be to the front, left, back and right of the VR capture device 6. Each tag sends BLE signals from which the HAIP locators derive the tag, and therefore, audio source location.

In general, such direction of arrival (DoA) positioning systems are based on (i) a known location and orientation of the or each locator, and (ii) measurement of the DoA angle of the signal from the respective tag towards the locators in the locators' local co-ordinate system. Based on the location and angle information from one or more locators, the position of the tag may be calculated using geometry.

The CRS 15 is a processing system having an associated user interface (UI) 16 which will explained in further detail below. As shown in Figure 1, it receives as input from the VR capture device 6 spatial audio and video data, and positioning data, through a signal line 17. Alternatively, the positioning data may be received from the HAIP locator 20. The CRS 15 also receives as input from each of the audio sources 7-13 audio data and positioning data from the respective positioning tags, or the HAIP locator 20, through separate signal lines 18. The CRS 15 generates spatial audio data for output to a user device 19, such as a VR headset with video and audio output.

The input audio data may be multichannel audio in loudspeaker format, e.g. stereo signals, 4.0 signals, 5.1 signals, Dolby Atmos (RTM) signals or the like. Instead of loudspeaker format audio, the input may be in the multi microphone signal format, such as the raw eight signal input from the OZO VR camera, if used for the VR capture device 6.

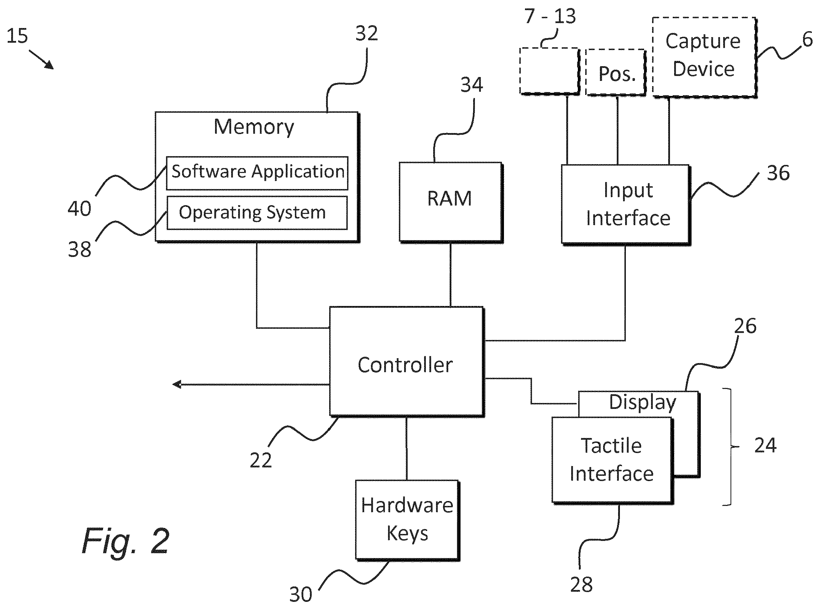

Figure 2 shows an example schematic diagram of components of the CRS 15. The CRS 15 has a controller 22, a touch sensitive display 24 comprised of a display part 26 and a tactile interface part 28, hardware keys 30, a memory 32, RAM 34 and an input interface 36. The controller 22 is connected to each of the other components in order to control operation thereof. The touch sensitive display 24 is optional, and as an alternative a conventional display may be used with the hardware keys 30 and/or a mouse peripheral used to control the CRS 15 by conventional means.

The memory 32 may be a non-volatile memory such as read only memory (ROM) a hard disk drive (HDD) or a solid state drive (SSD). The memory 32 stores, amongst other things, an operating system 38 and software applications 40. The RAM 34 is used by the controller 22 for the temporary storage of data. The operating system 38 may contain code which, when executed by the controller 22 in conjunction with RAM 34, controls operation of each of hardware components of the terminal.

The controller 22 may take any suitable form. For instance, it may be a microcontroller, plural microcontrollers, a processor, or plural processors.

In embodiments herein, the software application 40 is configured to provide video and distributed spatial audio capture, mixing and rendering to generate a VR environment, or virtual space, including the rendered spatial audio. The software application 40 also provides the UI 16 shown in Figure 1, through its output to the display 24 and receives user input through the tactile interface 28 or other input peripherals such as the hardware keys 30 or a mouse (not shown). The mixing stage, which forms a sub-part of the rendering stage in this case, may be performed manually through the UI 16 or all or part of said mixing stage may be performed automatically. The software application 40 may render the virtual space, including the spatial audio, using known signal processing techniques and algorithms based on the mixing stage.

The input interface 36 receives video and audio data from the VR capture device 6, such as Nokia's OZO (RTM) device, and audio data from each of the audio sources 7 - 13. The input interface 36 also receives the positioning data from (or derived from) the positioning tags on each of the VR capture device 6 and the audio sources 7 - 13, from which may be made an accurate determination of their respective positions in the real world space 3.

The software application 40 may be configured to operate in any of real-time, near real-time or even offline using pre-stored captured data.

During capture it is sometimes the case that audio sources move. For example, in the Figure 1 situation, any one of the audio sources 7 - 13 may move over time, as therefore will their respective audio position with respect to the capture device 6 and also to each other. Commonly, users may be used to static sources where the audio source is generally central. When audio sources move, the rendered result may be overwhelming and distracting.

One example aspect of the mixing stage of software application 40 is controlling how audio sources move, or change position, in the rendered virtual space responsive to identification of a most important source (MIS) relative to other available audio sources, which may be determined using various methods. For example, the MIS may be a source identified from available audio sources based on predetermined rules. The term "primary audio source" can be used in place of MIS.

In some embodiments, the software application 40 controls how the audio sources move responsive to movement of the MIS. This may be useful, for example, to give (in spatial terms) room for more important or prominent audio sources which may represent solo performances, monologues and other speech type performances. It may also be useful to give room for important user interface sound notifications, as another example.

To handle real world movement, the software application 40 may be configured to reposition audio sources, or groups of audio sources when the MIS moves when rendering the spatial audio part of the virtual space. This repositioning or movement is performed based on a number of attributes, to be described below, some of which may be set manually through the UI 16 and some of which may be handled automatically by predetermined algorithms.

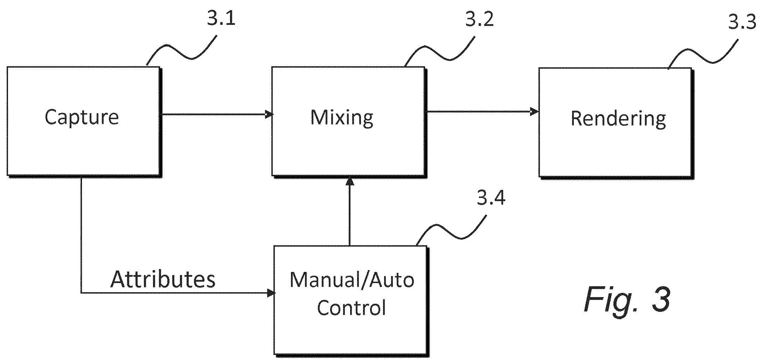

Figure 3 shows an overview flow diagram of the capture, mixing and rendering stages of software application 40. As mentioned, the mixing and rendering stages may be combined. First, video and audio capture is performed in step 3.1; next mixing is performed in step 3.2, followed by rendering in step 3.3. Mixing (step 3.2) may be dependent on a manual or automatic control step 3.4 which may be based on attributes of the captured video and/or audio. Other attributes may be used.

Examples of how the mixing step 3.2 may be performed will now be described.

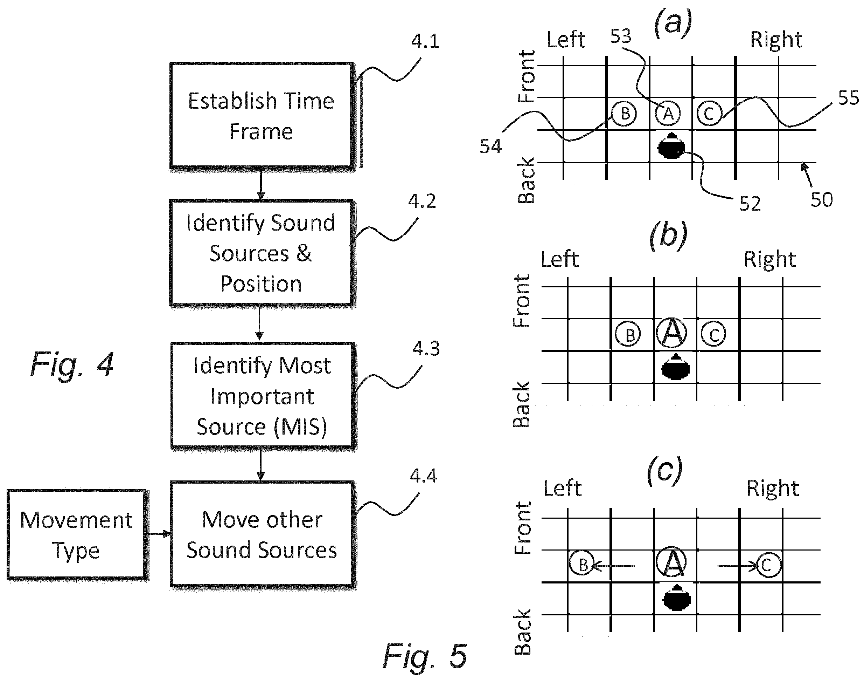

Figure 4 shows an overview of the processing steps that are performed by the software application 40. In a first step 4.1 a time frame is established. The time frame is a finite period of time that starts with a predetermined event being detected, e.g. an event such as a solo in a musical performance. In a second step 4.2 identification of the audio sources and their respective spatial positions is determined, for example using HAIP tags carried by each audio source. Position may alternatively be determined by visual analysis, instrument recognition and/or sound source direction recognition. In a subsequent step 4.3 a primary, or most important source (MIS) of the audio sources is identified. Methods for identifying the MIS will be described below. In a subsequent step 4.4 other sound sources are spatially moved, dependent on a predetermined preference setting as to the type of movement required. The preference setting may be automatically or manually selected, e.g. through the user interface 16. Two examples of preference setting are described later on below, one being a so-called "repelling" movement setting and another being a so-called "mirroring" movement setting.

It will be appreciated that the Figure 4 steps may be broken down into further steps. For example, determining the number of audio sources and determining their respective spatial positions may be separate steps. One or more grouping steps may also be used, e.g. to group plural audio sources together based on some preference setting or attribute and controlling movement of the members of each different group differently.

In determining which one of the audio sources is the MIS relative to the other audio sources, different methods may be employed. One method is to compare the audio sources playing in the current time frame using a rule set, which may include one or more of the following rules:
- the MIS is that which has a leading function in the audio signals, e.g. the melody or solo line or a monologue in a stage play or movie ;
- the MIS is the key performer, e.g. the principle actor in a play or movie;
- the MIS exhibits the greatest amplitude within the time frame;
- the MIS exhibits the greatest spatial movement within the time frame;
- the MIS exhibits the greatest pitch variation within the time frame;
- the MIS has the most complex timbre or timbral variation within the time frame.

For example, a signal analysis method for identifying singing from non-singing type vocalisation is described in Berenzweig, A.L. and Ellis, D.P.W. "Locating Singing Voice Segments within Music Signals" Applications of Signal Processing to Audio and Acoustics, 2001, IEEE Workshop on the, 2001, 119-122.

This may be used to identify a speech-type monologue from singing, which may be the basis of MIS determination.

A further method of identifying audio signal type, e.g. for identifying singing or a particular instrument, is described in PCT/FI2014/051036 the contents of which are incorporated herein by reference.

A generalised method for classifying and therefore distinguishing between singing, speaking, shouting etc. which may be the basis of MIS determination may comprise training a model, for example a Gaussian mixture model or a neural network. For the training stage, a set of audio files is obtained where the vocal type is known. From the audio files, a set of representative features are extracted; suitable features may be, for example, mel-frequency cepstral coefficients and the fundamental frequency (fo). Also, other features related to, for example, voice characteristics may be used.

Using the features, the models are then trained to represent typical feature values of different vocalisation types, in the case of a Gaussian mixture model, or a neural network is trained to discriminate between the different vocalisation types given the features. Online classification is then performed by extracting the same features from the input signal, and then evaluating which model has the highest likelihood of having generated the features (Gaussian mixture model) or which category gives the largest output value (neural network).

Where the MIS is a key performer in a performance, this may be determined using the above-described signal analysis methods, or by the key performer carrying an associated identification tag which is detectable by the system.

The trigger for identifying the MIS (which may be within a common time frame) may be a sudden change in property, whether an audio signal property such as amplitude, or a spatial property such as a sudden positional change. The triggering action may be made manually by a director or listener.

It will be appreciated from the above that some MIS identifications rules include comparing audio signals from each audio source within the time frame using known signal processing techniques. Amplitude or pitch comparison is relatively straightforward. Other methods include comparing the change in movement of the audio sources, e.g. using information from the positioning tags carried by the audio source over the time frame. Other methods may use information as to the role of each audio source, e.g. carried by a tag specific to the role of, for example, vocalist, drummer, lead actor, or which may be entered through the UI 16.

In other embodiments, contextual data relating to the content of the audio signals may be employed to assist identification of the MIS. One example is where the content is music of a particular genre, e.g. rock music or theatrical play. A director or listener of the content may manually define the MIS by clicking on a graphical representation of the relevant audio source on the UI 16.

With reference to Figures 5a - 5c, a first graphical example is shown. Specifically, Figure 5a shows part of a spatial audio field 50 arranged into a two-dimensional grid, for convenience.

A three dimensional representation could be employed in other examples. The listener position 52 is indicated as shown in relation to three audio sources 53, 54, 55 positioned in front of the listener, and respectively labelled A, B and C. They each carry in this example a positioning tag and are assumed to have even properties, i.e. they are not ranked by relative importance in any way. Referring now to Figure 5b, audio source 53 is determined to be the MIS using one of the above rules. Referring to Figure 5c, the other audio sources 54, 55 are moved by the mixing stage to move away from the MIS 53 by the same spatial distance. This type of movement, which may be termed a "repelling" movement, may be pre-defined as the required movement setting through the user interface 16 from one of a number of possible setting types. The result is that audio sources 54, 55 make space for the user to perceive and appreciate the increased complexity of MIS 53 which might otherwise be distracting and disturbing.

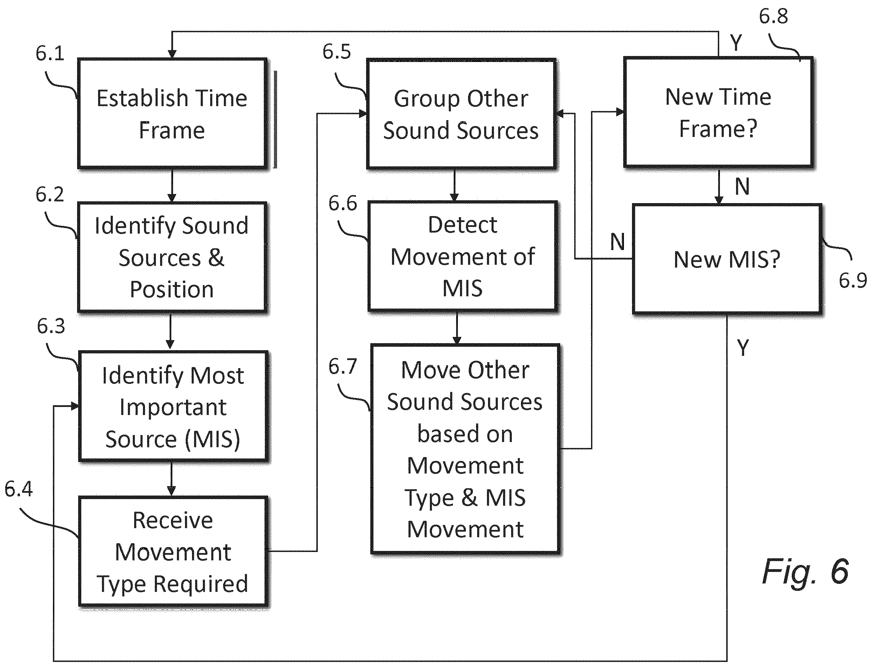

Referring now to Figure 6, a more detailed flow chart indicating processing steps in a further embodiment performed by the software application 40 is shown. It is assumed that a multichannel spatial audio stream is received. In step 6.1 a time frame is established, as before. In step 6.2 the number of audio sources and respective spatial positions of each are determined. In step 6.3 the MIS is identified from among their number using one or more of the above described rules. In step 6.4 the preferred or selected movement setting is received, e.g. repelling or mirroring, to be described later on. This may be set by the director or listener through the user interface 16. In step 6.5 the other audio sources may be grouped based on properties or attributes, and again these may be set by preference settings. In step 6.7 the other audio sources are moved in space based on the movement setting and also the movement of the MIS. In step 6.8 it is determined if a new time frame is required. If so, the process returns to step 6.1. If not, it is determined in step 6.9 whether a new MIS is triggered. If so, the process returns to step 6.3. If not, the process returns to step 6.5.

A number of further graphical examples will now be described.

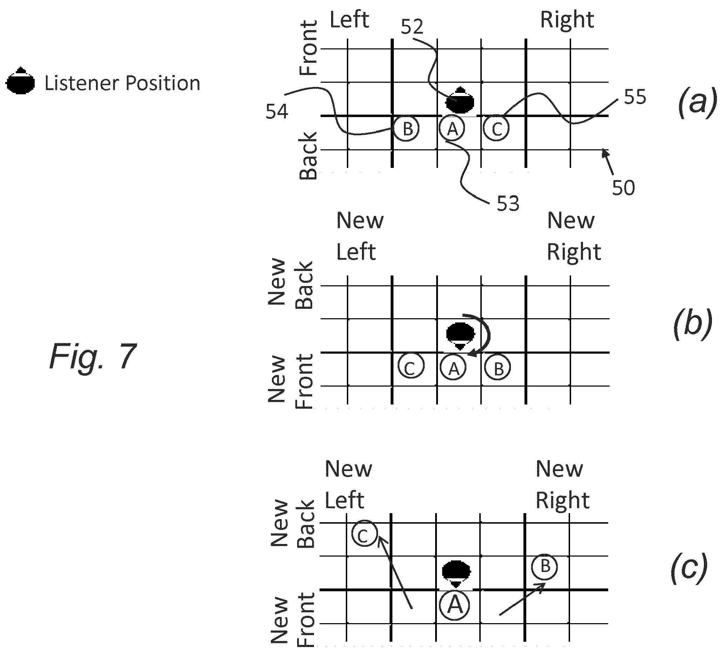

Referring to Figure 7, another example of using the repelling movement type is shown. In Figure 7a, the three audio sources 53, 54, 55 are positioned behind the listener's position 52. Each are assumed to have even properties or attributes at this point. The process at this stage may determine that each audio source 53, 54, 55 is to be ranked by priority, with audio source A 53 being the MIS, audio source B 54 being the next most important and audio source C 55 being the least important. Referring to Figure 7b, the listener 52 turns their head in space in response to the MIS 53 making a sound, which triggers MIS detection and causes the other two sources 54, 55 to move in a repelling motion based on rules. Referring to Figure 7c, the medium ranked audio source 54 moves away by one square and the lowest ranked audio source 55 by two squares. Again, this makes space for the user to better perceive the audio from the MIS 53.

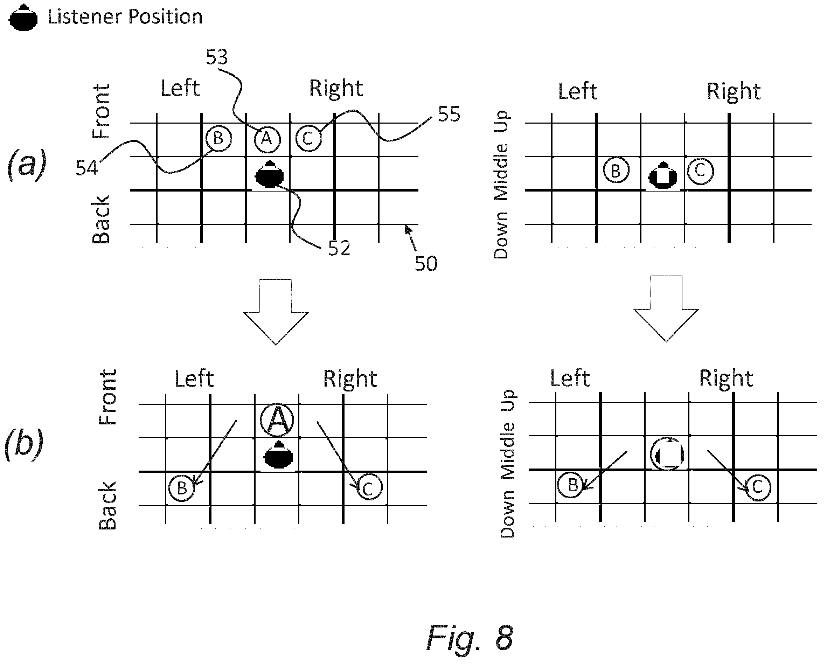

Referring to Figures 8a and 8b, another graphical example is shown, this time in three dimensional space; the left hand grid 50 shows the horizontal plane and the right hand grid 60 the vertical plane. It is assumed that each of the audio sources 53, 54, 55 have even properties. In Figure 8a, the audio sources 53, 54, 55 are in front of the listener 52 and at the same vertical level. In Figure 8b, in response to the central audio source 53 being the MIS, the other audio sources 54, 55 move away (assuming a repelling movement type) both backwards and downwards to the left and right.

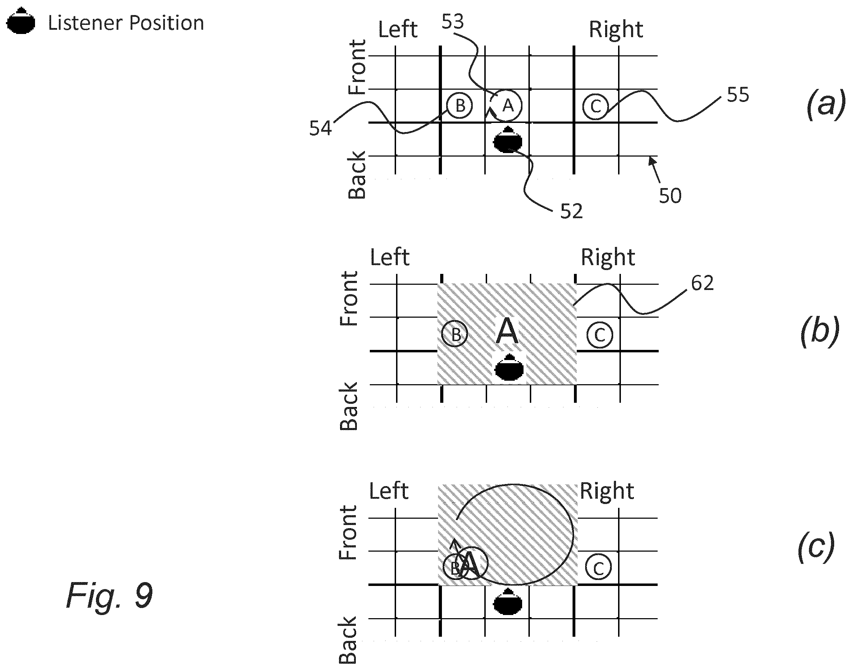

Referring to Figures 9a to 9c, another graphical example is shown. In this case, the audio source 53 identified as the MIS is made larger in terms of spatial area whereas the other audio sources 54, 55 are kept as point sources. In this case, the MIS is permitted to move on top of other sources and be perceived well. For example, in Figure 9a, audio source 53 moves in a small circular pattern and as a result of the rule employed, is determined to be the MIS. In Figure 9b, the space for the MIS 53 is expanded from one block to a 3x3 block zone 62. In Figure 9c, the MIS 53 may move to the left within the expanded block zone 62 and so on top of the audio source 54.

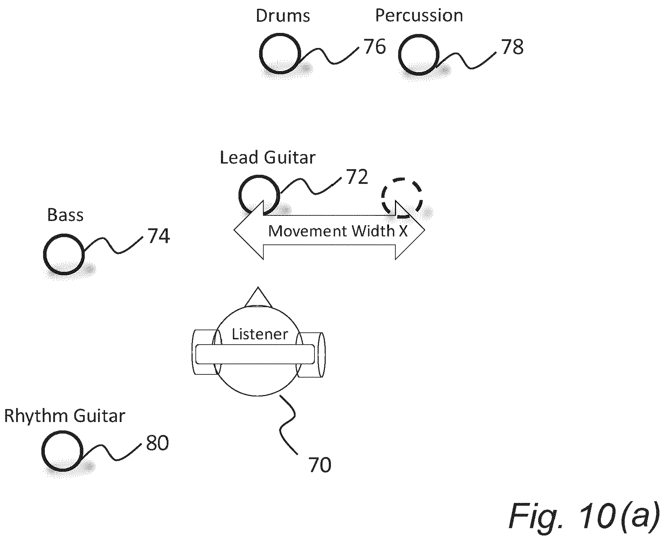

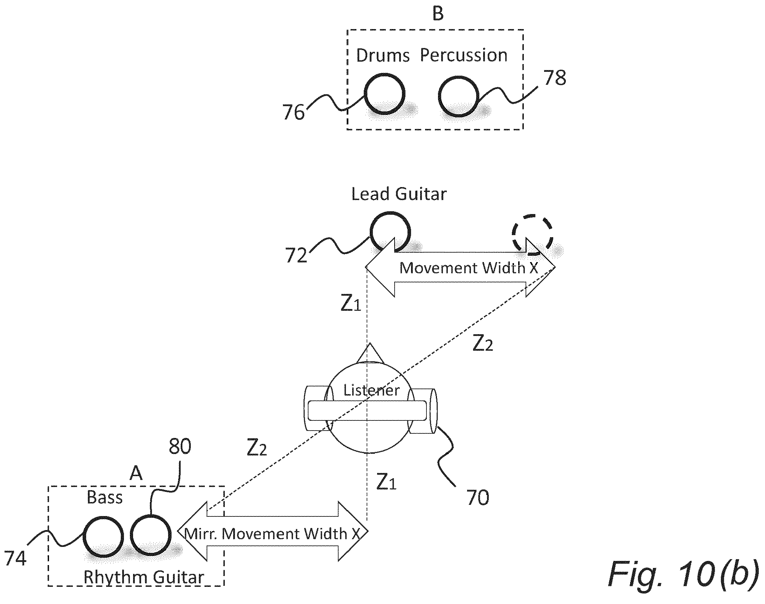

Referring now to Figures 10a and 10b, a still further graphical example is shown. In this case, the selected movement type is different from the repelling type described above; rather, a so-called "mirroring" or "tracking" movement type is employed. In overview, the MIS is determined as before, and other audio sources may be grouped based on some manual or automatic preferment setting. Whenever the MIS is detected as moving in the spatial audio field, the groups are automatically moved in a mirroring or tracking pattern. In some embodiments, some groups may be moved and others locked. Within individual groups, repositioning of its members may occur.

In grouping audio sources (other than the MIS) one or a number of so-called grouping rules may be applied. For example:
- bass root note and guitar accompaniment sources are grouped together, whereas instruments playing chords outside of the current chord or key or context are not grouped;
- doubling and/or imitating instruments are grouped;
- grouping is performed based on instrument family, e.g. strings, brass, woodwind, drums, percussion, synthesiser;
- grouping is performed based on tonal range, e.g. instruments playing notes between C3 and C4 form a group;
- grouping is performed based on similar effect, e.g. vibrato, flinger, distortion, delay/echo;

Multiple grouping pre-sets may be stored and selected manually or automatically. The grouping may be personalised for individual listeners.

In some embodiments using the mirroring movement type, the MIS may be selected from within the listener's field of view. Movement of the MIS defines movement of the grouped audio sources, even groups outside of the field of view. This is found to maintain a good spatial balance between audio sources in front of, and behind, the listener's position. Audio sources behind the listener may move towards optimal positions, following an audio source to the front. Optimal positions may be predefined, e.g. with the drums in the centre, and bass either side of the MIS.

Referring to Figure 10a the listener 70 is listening to a concert recording. In this initial state, directly in front of the listener 70 is the lead guitar source 72. To the right of the lead guitar source 72 is a bass source 74. Behind the lead guitar source 72 are the drums and percussion sources 76, 78. Behind the listener 70, to the left, is the rhythm guitar source 80. The lead guitar source 72 moves from the centre point to the right hand side (from the listener's perspective) and back again by a width X. This source 72 is identified as the MIS by the appropriate motion-based rule.

Referring now to Figure 10b the other sources are grouped as follows by preferment rules. The percussion source 78 is moved closer to the drum source 76 and grouped therewith (group B) and the position locked. The bass and rhythm guitar sources 74, 80 are moved closer together and grouped as group A. The process then moves group A to mirror the movement of the MIS 72, as shown, along one axis. Group A is placed behind the listener 70 at a distance which is the same as that between the MIS 72 and listener, i.e. Z. The centre-to-right movement of the MIS 72 is mirrored by sources 74, 80 in group A.

This mirroring movement of the sources 74, 80 may be implemented in two ways. One method is to group the sources 74, 80 next to each other and move them together to directly mirror that of the MIS 72. Another method is to allow one source, e.g. the bass source 74 to move from the left hand side of the mirrored movement area to the middle, and the rhythm guitar source 80 from the right side of the mirrored movement area to the middle.

The mirroring movement may be implemented on the horizontal axis only; or on the vertical axis only in the spatial audio field.

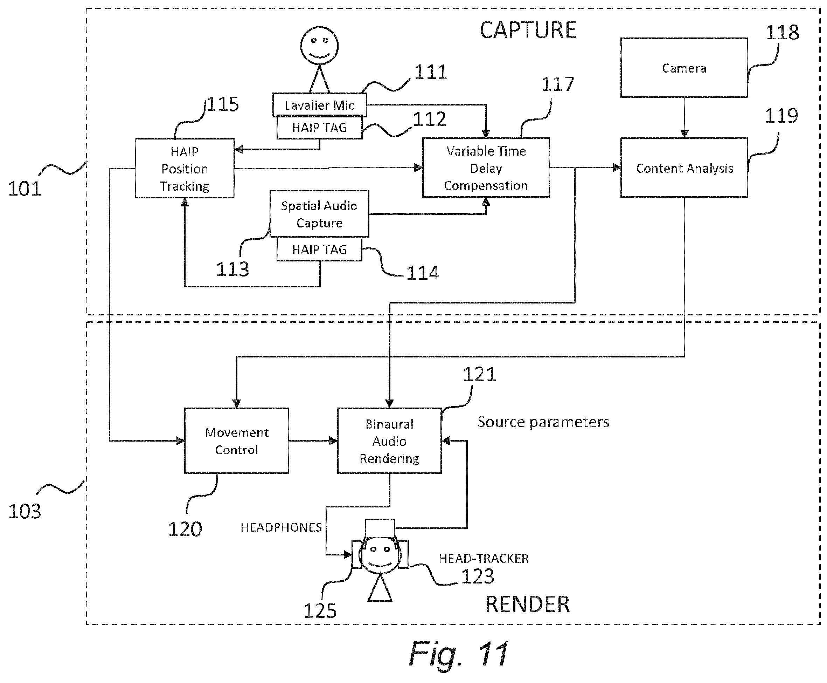

Referring now to Figure 11, an example schematic representation of capture and rendering parts of the Figure 1 scenario is shown, some parts of which are provided by the CRS 15, in terms of functional components for mixing and rendering. For ease of explanation, the Figure 13 shows separate capture and rendering parts 101, 103 with mixing being performed as part of the rendering part.

In this example, there is shown only one audio signal source, indicated by reference numeral 111; however in practice there will be multiple such sources each of which may move in real world space. The audio source is in this example a Lavalier microphone 111 associated with a movable person, e.g. a singer.

The Lavalier microphone 111 is an example of a 'close' audio source capture apparatus and may in some embodiments be a boom microphone or similar neighbouring microphone capture system. Although the following examples are described with respect to a Lavalier microphone and thus a Lavalier audio signal the concept may be extended to any microphone external or separate to e.g. the microphones or array of microphones of the VR capture device 6 configured to capture the spatial audio signal. Thus the concept is applicable to any external/additional microphones in addition to a spatial audio capture (SPAC) microphone array, used in the OZO device, be they Lavalier microphones, hand held microphones, mounted mics, etc. The external microphones may be worn/carried by persons or mounted as close-up microphones for instruments or a microphone in some relevant location which the designer wishes to capture accurately. The Lavalier microphone 111 may in some embodiments be a microphone array. The Lavalier microphone typically comprises a small microphone worn around the ear or otherwise close to the mouth. For other sound sources, such as musical instruments, the audio signal may be provided either by a Lavalier microphone or by an internal microphone system of the instrument (e.g., pick-up microphones in the case of an electric guitar).

The Lavalier microphone 111 may be configured to output the captured audio signals to a variable delay compensator 117. The Lavalier microphone may be connected to a transmitter unit (not shown), which wirelessly transmits the audio signal to a receiver unit (not shown).

Furthermore the capture part 101 comprises a Lavalier (or close source) microphone position tag 112. The Lavalier microphone position tag 112 may be configured to determine information identifying the position or location of the Lavalier microphone 111 or other close microphone. It is important to note that microphones worn by people may be freely moved in the acoustic space and the system supporting location sensing of wearable microphone may support continuous sensing of user or microphone location. The Lavalier microphone position tag 112 may be configured to output this determination of the position of the Lavalier microphone to a position tracker 115.

The capture part 101 comprises a spatial audio capture device 113 which corresponds to the VR capture device 6 in Figure 1. The spatial audio capture device 113 is an example of an 'audio field' capture apparatus and may in some embodiments be a directional or omnidirectional microphone array. The spatial audio capture device 113 may be configured to output the captured audio signals to a variable delay compensator 117.

Furthermore the capture part 101 may comprise a spatial capture position tag 114. The spatial capture position tag 114 may be configured to determine information identifying the position or location of the spatial audio capture device 113. The spatial capture position tag 114 may be configured to output this determination of the position of the spatial capture microphone to the position tracker 115. In the case the position tracker is co-located with the capture apparatus or the position of the capture apparatus with respect to the position tracker is otherwise known, and location data is obtained in relation to the capture apparatus, the capture apparatus does not need to comprise a position tag.

In some embodiments the spatial audio capture device 113 is implemented within a mobile device. The spatial audio capture device is thus configured to capture spatial audio, which, when rendered to a listener, enables the listener to experience the sound field as if they were present in the location of the spatial audio capture device. The Lavalier microphone 111 in such embodiments may be configured to capture high quality close-up audio signals (for example from a key person's voice, or a musical instrument). When mixed to the spatial audio field, the attributes of the key source such as gain, timbre and spatial position may be adjusted in order to provide the listener with a much more realistic immersive experience. In addition, it is possible to produce more point-like auditory objects, thus increasing the engagement and intelligibility.

The capture part 101 furthermore may comprise a position tracker 115. The position tracker 115 may be configured to receive the positional tag information identifying positions of the Lavalier microphone 111 and the spatial audio capture device 113 and generate a suitable output identifying the relative position of the Lavalier microphone 111 relative to the spatial audio capture device 113 and output this to the render apparatus 103 and specifically in this example to a location data filtering model which is provided in a movement control module 120 mentioned below. Furthermore in some embodiments the position tracker 115 may be configured to output the tracked position information to a variable delay compensator 117.

Thus in some embodiments the locations of the Lavalier microphones (or the persons carrying them) with respect to the spatial audio capture device 113 may be tracked and used for mixing the sources to correct spatial positions. In some embodiments the position tags namely, the microphone position tag 112 and the spatial capture position tag 114 may be implemented using High Accuracy Indoor Positioning (HAIP) or another suitable indoor positioning technology. In some embodiments, in addition to or instead of HAIP, the position tracker may use video content analysis and/or sound source localization, as will be explained below.

The capture part 101 furthermore may comprise a variable delay compensator 117 configured to receive the outputs of the Lavalier microphone 111 and the spatial audio capture device 113. Furthermore in some embodiments the variable delay compensator 117 may be configured to receive source position and tracking information from the position tracker 115. The variable delay compensator 117 may be configured to determine any timing mismatch or lack of synchronisation between the close audio source signals and the spatial capture audio signals and determine the timing delay which would be required to restore synchronisation between the signals. In some embodiments the variable delay compensator 117 may be configured to apply the delay to one of the signals before outputting the signals to the render apparatus 103 and specifically in this example to the audio renderer 121. The timing delay may be referred as being a positive time delay or a negative time delay with respect to an audio signal. For example, denote a first (spatial) audio signal by x, and another (Lavalier) audio signal by y. The variable delay compensator 117 is configured to try to find a delay _{T}, such that x(n)=y(n-_{T}). Here, the delay _{T} may be either positive or negative.

The capture stage 101 furthermore may comprise a camera 118 configured to capture video signals; the camera 118 may be a single camera or array of cameras, as in the OZO device example, in which spatial video signals are produced. In some embodiments, the camera 118 may form part of the same physical unit as the spatial audio capture device 113.

The capture stage 101 further may comprise a content analysis module 119 which receives both the video signals from the camera 118 and audio from the variable time delay compensator 117, which corrects for any timing mismatch or lack of synchronisation between the close audio signals, the spatial capture audio signals and the video signals. The output from the content analysis module 119 is provided to the rendering stage 103.

Also provided to the rendering stage 103 are signals from the position tracker 115 and the signals from the time delay compensator 117.

In some embodiments, the render part 103 comprises a head tracker 123. The head tracker 123 may be any suitable means for generating a positional input, for example a sensor attached to a set of headphones configured to monitor the orientation of the listener, with respect to a defined or reference orientation and provide a value or input which may be used by the audio renderer 121. The head tracker 123 may in some embodiments be implemented by at least one gyroscope and/or digital compass.

In some embodiments, the render part 103 comprises a movement control module 120 which takes as input the unfiltered HAIP location data from the position tracker 115, and the audiovisual content analysis data from the content analysis module 119. This movement control module 120 is that which employs the aforementioned software application to perform the process steps, which include identifying the MIS whose properties control the grouping and movement of the other sound sources, effectively to give room to the MIS for a user to better perceive and appreciate the sound from the MIS, i.e. using the repelling movement type. Use of the mirroring movement type allows audio sources to be grouped and moved in an aesthetically pleasing way.

The render part 103 comprises an audio renderer 121. The audio renderer 121 is configured to receive output for the movement control module 120. The audio renderer 121 may furthermore be configured to receive an input from the head tracker 123. Furthermore the audio renderer 121 may be configured to receive other user inputs for example entering manually through the UI 16. The audio renderer 121, as described herein in further detail later, may be configured to mix together the audio signals, namely the Lavalier microphone audio signals and the spatial audio signals based on the positional information and/or the head tracker inputs in order to generate a mixed audio signal in accordance with the methods and rules described above to cater for detected movement over time. The mixed audio signal may for example be passed to headphones 125. However the output mixed audio signal may be passed to any other suitable audio system for playback (for example a 5.1 channel audio amplifier).

In some embodiments the audio renderer 121 may be configured to perform spatial audio processing on the audio signals from the microphone array and from the close microphone.

The Lavalier audio signal is from the Lavalier microphones and the spatial audio captured by the microphone array and processed with the spatial analysis may in some embodiments be combined by the audio renderer to a single binaural output which may be listened through headphones.

The spatial audio signal may be converted into a multichannel signal. The multichannel output may then be binaurally rendered, and summed with binaurally rendered Lavalier source signals.

The rendering may be described initially with respect to a single (mono) channel, which may be one of the multichannel signals from the spatial audio signal or one of the Lavalier sources. Each channel in the multichannel signal set may be processed in a similar manner, with the treatment for Lavalier audio signals and multichannel signals having the following differences:
1) The Lavalier audio signals have time-varying location data (direction of arrival and distance) whereas the multichannel signals are rendered from a fixed location.
2) The ratio between synthesized "direct" and "ambient" components may be used to control the distance perception for Lavalier sources, whereas the multichannel signals are rendered with a fixed ratio.
3) The gain of Lavalier signals may be adjusted by the user whereas the gain for multichannel signals is kept constant.

The render part 103 in some embodiments may comprise headphones 125. The headphones may be used by the listener to generate the audio experience using the output from the audio renderer 121.

Thus based on the location tracking, the Lavalier microphone signals may be mixed to suitable spatial positions in the spatial audio field in accordance with predetermined rules or user input. The rendering may be done by rendering the spatial audio signal using virtual loudspeakers with fixed positions, and the captured Lavalier source is rendered from a time varying position. Thus, the audio renderer 121 is configured to control the azimuth, elevation, and distance of the Lavalier or close source based on the tracked position data and the filtering rules.

Moreover, the user may be allowed to adjust the gain and/or spatial position of the Lavalier source using the output from the head-tracker 123. For example by moving the listeners head the head-tracker input may affect the mix of the Lavalier source relative to the spatial sound. This may be changing the 'spatial position' of the Lavalier source based on the head-tracker or by changing the gain of the Lavalier source where the head-tracker input is indicating that the listener's head is 'towards' or 'focussing' on a specific source. Thus the mixing/rendering may be dependent on the relative position/orientation of the Lavalier source and the spatial microphones but also be dependent on the orientation of the head as measured by the head-tracker. In some embodiments the user input may be any suitable user interface input, such as an input from a touchscreen indicating the listening direction or orientation.

Alternatively to a binaural rendering (for headphones), a spatial downmix into a 5.1 channel format or other format could be employed. In this case, the Lavalier or close source may in some embodiments mixed to its 'proper' spatial position using known amplitude panning techniques.

It will be appreciated that the above described embodiments are purely illustrative and are not limiting on the scope of the invention. Other variations and modifications will be apparent to persons skilled in the art upon reading the present application.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. A method comprising:
receiving a plurality of audio signals representing captured audio from respective audio sources in a space;
processing the received audio signals to generate a spatial audio signal, in which the processing comprises:
identifying one of the audio sources as a primary audio source; and
subsequent to identifying the primary audio source, generating the spatial audio signal so that the spatial position of the one or more other audio sources is changed.

2. The method of claim 1, wherein the spatial position of the one or more other audio sources is changed responsive to detecting a change in spatial position of the primary source.

3. The method of claim 1 or claim 2, wherein the step of identifying the primary audio source is performed responsive to an event detected through analysis of the audio signals or a detected positional change, and is repeated subsequently upon detection of a new event.

4. The method of any preceding claim, wherein the step of identifying the primary audio source is based on attributes of the audio signals received from the audio sources.

5. The method of any of claims 1 to 3, wherein the step of identifying the primary audio source comprises identifying the audio source exhibiting the greatest spatial movement.

6. The method of any preceding claim, further comprising dividing the other audio sources into groups, and, in generating the spatial audio signal, applying different changes in spatial position to audio sources in different groups.

7. The method of any preceding claim, wherein the step of generating the spatial audio signal comprises changing the positions of the other audio sources to move away from the primary audio source subsequent to its identification.

8. The method of any of claims 1 to 6, wherein the step of generating the spatial audio signal comprises changing the positions of the other audio sources to track movement of the primary audio source.

9. The method of claim 8 , wherein prior to generating the spatial audio signal, the method further comprises grouping at least two of the other audio sources in which the spatial position of at least one is changed so that they are spatially closer together, and wherein, in generating the spatial audio signal, the grouped audio sources track movement of the primary audio source in substantially the same direction.

10. The method of any preceding claim, further comprising receiving data indicating a selected one of a plurality of possible movement types, and wherein the step of generating the spatial audio signal comprises changing the spatial position of the other audio sources based on rules corresponding to the movement type.

11. The method of claim 10, wherein one of the said movement types is a repelling type in which the corresponding rules cause the spatial positions of the other audio sources to move away from the primary audio source subsequent to its identification.

12. The method of claim 10 or claim 11, wherein one of the said movement types is a mirroring type in which the corresponding rules cause the spatial positions of the other audio sources to follow or mirror the primary audio source subsequent to its identification.

13. A computer program comprising instructions that when executed by a computer apparatus control it to perform the method of any of claims 1 to 12.

14. An apparatus configured to perform the method of any of claims 1 to 12.
